# EUROPEAN PATENT APPLICATION

(11) **EP 3 511 580 A1**
(43) Date of publication of application: **17.07.2019**
(21) Application number: 18400002.4
(22) Date of filing: 15.01.2018
(51) Int. Cl.: F16B 21/09, B64C 1/40, B60R 16/02, F16L 3/227, F16L 3/24, H02G 3/32

(54) **A QUICK-FASTENING SUPPORT DEVICE FOR SUPPORTING ELEMENTS THAT ARE TO BE ROUTED ON AN ASSOCIATED STRUCTURE**

(71) Applicant: AIRBUS HELICOPTERS DEUTSCHLAND GmbH, 86609 Donauwörth (DE)
(72) Inventor: Huebner, Gottfried, D-86681 Fünfstetten (DE); Rowbut, Alexander, D-86609 Donauwörth (DE)
(74) Representative: GPI & Associés

(57) **Abstract**

The invention relates to a quick-fastening support device 2 for supporting elements that are to be routed on an associated structure, comprising a mounting interface 3 that is fixedly mountable to an associated structure, and a support rail 4 that is removably mountable to the mounting interface 3, the support rail 4 being attachable to a multiplicity of elements that are to be routed prior to being removably mounted to the mounting interface 3.

## Description

The present invention is related to a quick-fastening support device for supporting elements that are to be routed on an associated structure. The present invention is further related to a rotary wing aircraft with a fuselage and such a quick-fastening support device that is mounted to the fuselage.

In a rotary wing aircraft, various elements must be routed on a given airframe resp. fuselage. By way of example, harnesses, hoses, pipes, cables, flexball cables, and so on, must be routed on airframes resp. fuselages of rotary wing aircrafts. However, respective routing tasks in rotary wing aircrafts are usually very time-consuming, complicated and expensive.

For instance, installation of a harness tree of only 5m length in a rotary wing aircraft may require several hours of attachment, installation and quality work performed by a worker, with approximately 30 harness supports that need to be installed on a given airframe resp. fuselage. Nevertheless, during the installation of such a harness tree, other activities in a given zone where the harness tree is installed are blocked and cannot be performed in parallel due to the routing work performed during the installation.

More specifically, usually a pre-equipped harness tree is manufactured and installed on a glued and/or riveted support with clamps or cable ties. However, integration of supports into the pre-equipped harness tree is critical due to a respectively available accessibility to an associated interface support/structure as well as a limited visibility of this interface support/structure for quality checks.

Most frequently, pre-equipped harness trees are prepared on associated master tool boards. The correspondingly pre-equipped harness trees are then attached individually with clamps or cable ties, e. g. TyRep's, to associated interface supports that are preinstalled in a given airframe resp. fuselage.

By way of example, the document DE 20 2015 100 360 U1 describes a cable holder and a cable holder system, which is suitable for fixing cables on a structure of a vehicle, such as an aircraft or automobile. The cable holder comprises a cable clamp for clamping a cable, wherein the cable clamp can be mounted without use of any tool in a form-fit manner to a base plate that is rigidly mounted to the structure of the vehicle. However, each base plate must be fixed individually with two associated fixation means, such as e. g. rivets, to the airframe resp. fuselage, and may only support a single cable clamp.

The document DE 10 2013 214 776 A1 describes an alternative fixation system for fixation of elements on an airframe of an air- respectively spacecraft. This fixation system comprises coupling components that allow to couple fixation adapters that are suitable for fixing elements that are to be routed along the airframe in form-fit manner to respective retaining structures that are formed on the airframe. However, this fixation system comprises a great number of individual components that must be provided and mounted to the given airframe, so that this fixation system is complicated, difficult to mount and expensive.

The document DE 10 2007 060 030 A1 describes still another alternative system for fixation of an electrical or fluid guiding pipeline to a structure of an air- or spacecraft. This fixation system comprises a basic holder arrangement that is rigidly mountable to an associated fixation section of the airframe. The basic holder arrangement comprises a system holder that is suitable to hold individual fixation systems. The system holder can be mounted removably to the basic holder arrangement such that its position on the basic holder arrangement is selectable in an application-specific manner. However, this fixation system comprises a great number of individual components that are mounted to each other similar to a puzzle such that all of these components define an application-specific modifiable construction set.

The document EP 2 399 821 A1 describes an aircraft having cables that are routed by means of respective mini-socles that are individually mounted to a respective airframe of a given aircraft by means of form-fit connectors. However, each mini-socle is either suitable for routing only a single cable, or only two cables. Thus, a comparatively great number of mini-socles must be installed in an elaborate, complex, and costly manner on the airframe respectively structure, where previously respective retaining bars must be installed for receiving of the mini-socles.

In summary, all of the above-described systems either comprise a comparatively great number of constituent components or are only destined for immediate use during installation, i. e. routing, of elements on an associated structure. However, none of these systems is suitable for pre-manufacturing of e. g. pre-equipped harness trees that may then be integrated and mounted to an associated structure, e. g. airframe resp. fuselage, as complete system component.

It is, therefore, an object of the present invention to provide a quick-fastening support device that allows installation of a complete pre-equipped harness tree on an associated structure, such as an airframe resp. fuselage of a rotary wing aircraft. This object is solved by a quick-fastening support device having the features of claim 1.

More specifically, according to the present invention a quick-fastening support device for supporting elements that are to be routed on an associated structure is provided. The quick-fastening support device comprises a mounting interface that is fixedly mountable to an associated structure, and a support rail that is removably mountable to the mounting interface. The support rail is attachable to a multiplicity of elements that are to be routed prior to being removably mounted to the mounting interface.

Advantageously, the inventive quick-fastening support device is not only suitable for installation of pre-equipped harness trees, but may be used for installation of various different elements that are to be routed, such as harnesses, hoses, pipes, cables, flexball cables, and so on. Furthermore, respective routing activities using the inventive quick-fastening support device are not limited to routing activities in airframes resp. fuselages of rotary wing aircrafts. Instead, the quick-fastening support device according to the present invention can be used in any type of vehicle, such as rotary wing aircrafts or aircrafts in general, spacecrafts, automobiles, vessels such as ships, and so on. Furthermore, the inventive quick-fastening support device may also be used in any other kind of structure, such as e. g. buildings.

According to one aspect, the mounting interface is assumed to represent a fixed base that is rigidly installed on the associated structure, while the support rail is preferably removable, thus, allowing integration of the support rail e. g. into a pre-equipped harness tree that may be prepared in a so-called "side-shop". Preferably, the mounting interface and the support rail can be locked to each other by means of a positive lock via suitable teeth. This advantageously allows a comparatively quick plug and play installation of e. g. a pre-equipped harness tree that comprises one or more support rails of inventive quick-fastening support devices into a respective final assembly line.

In other words, while the mounting interface is fixedly mounted to the associated structure, a respective harness tree can be pre-equipped with respective support rails. This subsequently allows a quick fastening of the support rails and, thus, of the pre-equipped harness tree to the mounting interface that is fixedly mounted to the associated structure. Accordingly, this allows frontloading of the assembling work and accelerates final assembly line turnaround times.

More specifically, the inventive quick-fastening support device preferably represents a split quick-fastening support system with a fixed part that is fixedly, i. e. rigidly and preferably non-removably, mountable to the associated structure as the mounting interface, and with a removable part that is removably mountable to the mounting interface as the support rail. In the context of the present invention, the expression "non-removably mountable" relates to a mounting that does not enable unmounting without suitable tools or in a non-destructive manner. The removable part, i. e. the support rail, is preferably integrated into an associated pre-equipped harness tree independent of mounting of the fixed part, i. e. the mounting interface, to the associated structure. In particular, use of the support rail that can be mounted to a pre-equipped harness tree separate of the mounting interface of the quick-fastening support device according to the present invention allows quick mounting and also quick removal of the pre-equipped harness tree from the associated structure, i. e. a given airframe, in case of rework or retrofit.

Preferably, the mounting interface and the support rail have harmonized teeth/pocket pattern to intermesh and interlock. The support rail is mounted to the mounting interface and individual elements of an associated pre-equipped harness tree, such as e. g. individual cables, are preferably fixed to the support rail by means of suitable element fixations, such as e. g. cable ties or cable clamps. Introducing of the support rail into the mounting interface is preferably performed by introducing the support rail into the mounting interface and sliding the support rail along its longitudinal axis within the mounting interface until the mounting interface and the support rail interlock.

Advantageously, the locking by intermeshing is possible in both axial directions of the mounting interface. In other words, dependent on available space in the associated structure, a respective locking movement can be performed in either direction of a respective longitudinal extension of the mounting interface. Respective lock positions are preferably visible by aligned axial ends of the mounting interface and the support rail, or by an achieved concentricity of locking holes and/or separating gaps, or still alternatively by suitable concurrent paint marks provided on the mounting interface and the support rail.

Locking of the support rail on the mounting interface in a predetermined final position can preferably be achieved by suitable locking means, such as e. g. pins, needles, safety wires or safety clips. Such locking means may e. g. be introduced into the separating gaps provided in the mounting interface and the support rail. However, the separating gaps provided in the mounting interface and the support rail do not only allow introduction of suitable locking means, but preferably also allow to provide a suitable flexibility of the mounting interface and the support rail that allows to twist/bend both parts and to place them, thus, on associated non-flat structures.

According to one aspect, the mounting interface and/or the supporting rail of the inventive quick-fastening support device are provided as virtually endless thermoplastic profiles that can be shortened on demand. This allows small stockage requirements of only few variants of different thermoplastic profiles.

According to one aspect, the mounting interface may be bonded, e. g. by means of a suitable adhesive or glue and/or one or more integrated adhesive stripes, riveted and/or screwed to the associated structure. However, combination of different ones of the described techniques, such as a simultaneous bonding by means of adhesive and a riveting, and so on, is likewise possible.

Advantageously, at least one and, preferably, both the mounting interface and the support rail are provided in respective low stress areas with suitable recesses, which can be implemented as holes, pockets and/or cavities, in order to reduce an underlying part weight. Furthermore, a respectively selected geometry of provided blocking teeth may be determined in an application-specific manner and, thus, e. g. be rectangular, oval, round, trapezoid, and so on. Moreover, any suitable chamfers/radii and slopes may be provided on the blocking teeth for easy and self-centering locking. This applies to both the blocking teeth of the mounting interface and the counter-blocking teeth of the support rail.

Finally, it should be noted that the mounting interface and/or the support rail may be provided with a base carrier that may be of any arbitrary type or geometry, such as flat or angled, i. e. horizontal, vertical or kinked with respect to associated support rail retainers of the mounting interface and/or routing guides of the support rail. In fact, it is sufficient if the respective base carriers are suitable to support associated support rail retainers and/or routing guides, as well as threaded bases such as male and/or female, as well as through or pocket holes for plug/socket connection.

According to a preferred embodiment, the support rail is removably mountable to the mounting interface by means of a two-step movement that comprises an initial insertion movement of the support rail in an insertion direction into the mounting interface for inserting the support rail into the mounting interface, and a subsequent locking movement of the support rail into a locking direction in the mounting interface for locking the support rail in the mounting interface. Preferably, the insertion direction and the locking direction are at least approximately perpendicular.

According to a further preferred embodiment, an end stopper is provided. The end stopper is preferably mountable to the mounting interface for determining a mounting end position of the support rail on the mounting interface.

According to a further preferred embodiment, the mounting interface is at least approximately U-shaped and the support rail is at least approximately T-shaped.

According to a further preferred embodiment, the mounting interface comprises a base carrier. The base carrier is preferably provided with a multiplicity of aligned support rail retainers that are respectively spaced apart from each other by an associated separating gap.

According to a further preferred embodiment, each one of the multiplicity of aligned support rail retainers is at least approximately U-shaped and comprises at least one blocking tooth.

According to a further preferred embodiment, the at least one blocking tooth closes an open end of the at least approximately U-shaped support rail retainer at least partly.

According to a further preferred embodiment, the support rail comprises a base carrier. The base carrier is preferably provided with a multiplicity of aligned blocking counter-tooth supports that are respectively spaced apart from each other by an associated separating gap. Preferably, the base carrier comprises a plurality of weight reducing recesses.

According to a further preferred embodiment, each one of the multiplicity of aligned blocking counter-tooth supports is at least approximately T-shaped and comprises at least one blocking counter-tooth.

According to a further preferred embodiment, each one of the multiplicity of aligned blocking counter-tooth supports comprises at least one associated routing guide that is adapted for supporting an element that is to be routed.

According to a further preferred embodiment, the at least one associated routing guide comprises a guide cavity for accommodating at least partly an element that is to be routed.

According to a further preferred embodiment, the at least one associated routing guide is provided with an end plate. The end plate has preferably a size that is greater than a cross-section of the at least one associated routing guide.

According to a further preferred embodiment, the at least one associated routing guide is adapted for attachment of an element fixation, in particular a cable tie or a clamp, for fixation of an element that is to be routed. Preferably, the end plate is provided for preventing gliding off of the element fixation from the at least one associated routing guide.

According to a further preferred embodiment, locking means are provided for locking the support rail at the mounting interface. The locking means preferably comprise at least one safety clip.

The present invention further provides a rotary wing aircraft with a fuselage and at least one quick-fastening support device that is mounted to the fuselage. The at least one quick-fastening support device is preferably embodied as described above.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a schematic perspective view of a vehicle that is adapted to receive a quick-fastening support device according to one aspect of the present invention,
- Figure 2 shows a perspective view of a quick-fastening support device with a mounting interface, a support rail and locking means according to one aspect of the present invention,
- Figure 3 shows a side view of the quick-fastening support device of Figure 2,
- Figure 4 shows a perspective view of the mounting interface of Figure 2 for illustrating an associated mounting surface,
- Figure 5 shows a perspective view of the mounting interface of Figure 2 for illustrating associated support rail retainers with blocking teeth,
- Figure 6 shows a perspective view of the support rail of Figure 2 for illustrating associated routing guides,
- Figure 7 shows a perspective view of the support rail of Figure 2 for illustrating associated blocking counter-tooth supports,
- Figure 8 shows perspective views of the mounting interface and the support rail of Figure 2 to Figure 7 during mounting of the support rail to the mounting interface,
- Figure 9 shows side views of the mounting interface and the support rail of Figure 2 to Figure 7 during mounting of the support rail to the mounting interface,
- Figure 10 shows a perspective view of the mounting interface of Figure 4 and Figure 5 with an end stopper according to one aspect of the present invention,
- Figure 11 shows a cut view of the quick-fastening support device of Figure 2 with the end stopper of Figure 10, wherein the locking means of Figure 2 is replaced by a safety clip according to one aspect of the present invention,
- Figure 12 shows a top view of the quick-fastening support device of Figure 11,
- Figure 13 shows a perspective view of the safety clip of Figure 11 and Figure 12,
- Figure 14 shows a perspective view of a safety clip according to a variant,
- Figure 15 shows a perspective view of the mounting interface of Figure 4 and Figure 5 with an enlarged base carrier according to one aspect,
- Figure 16 shows a perspective view of the quick-fastening support device of Figure 11 and Figure 12, wherein the base carrier of the mounting interface is provided with a perpendicular mounting flange according to one aspect, and
- Figure 17 shows a side view of the quick-fastening support device of Figure 16.

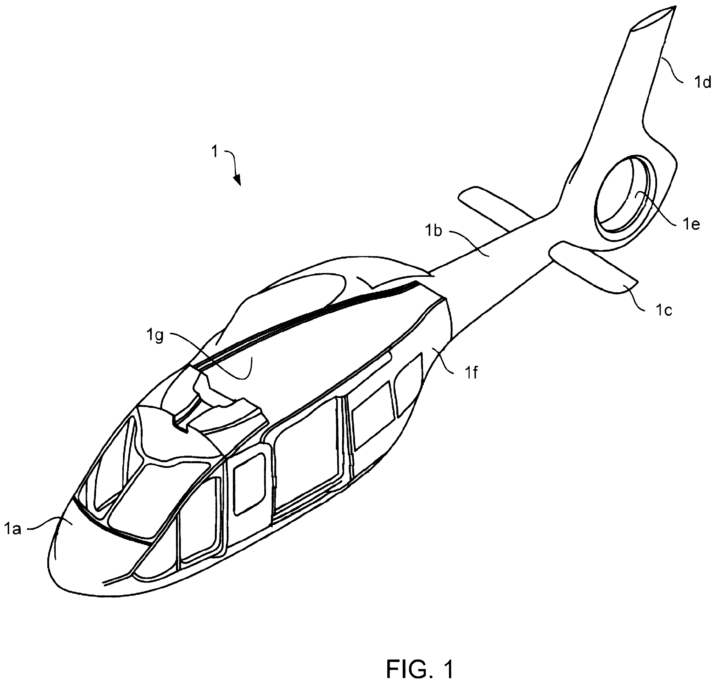

Figure 1 shows a vehicle 1 that is exemplarily illustrated as an aircraft, in particular as a rotary wing aircraft and, more particularly, as a helicopter. Thus, for purposes of simplicity and clarity, the vehicle 1 is hereinafter referred to as the "rotary wing aircraft 1". The present invention is, however, not limited to rotary wing aircrafts and can likewise be applied to any other vehicle, in particular to a vehicle that is controllable in a flowing medium, such as air or water, independent of a particular configuration thereof. Furthermore, the present invention may also be applied in other structures, such as buildings and so on.

Illustratively, the rotary wing aircraft 1 comprises an airframe resp. fuselage 1a that defines a tail boom 1b, which exemplarily comprises a horizontal stabilizer 1c, a fin 1d and a shroud 1e for accommodation of a suitable counter-torque device, such as a tail rotor, which is configured to provide counter-torque during operation in order to balance the rotary wing aircraft 1 in terms of yaw. The tail boom 1b may further be provided e. g. with a horizontal stabilizer, a bumper and so on.

It should be noted that only the fuselage 1a with the tail boom 1b are shown in Figure 1 for purposes of simplicity and clarity of the drawings. However, other conventional components, such as e. g. a main rotor and a landing gear of the rotary wing aircraft 1, are not shown, as they are well-known to the person skilled in the art and not part of the present invention and would, thus, only unnecessarily encumber and complicate the representation.

Illustratively, the fuselage 1a comprises at least two longitudinal side walls, a board side wall 1f and a starboard side wall 1g, both of which are preferably connected to the tail boom 1b. The fuselage 1a preferably defines at least a cockpit, a passenger cabin and/or a cargo compartment. However, for simplicity and clarity of the description, such a cockpit, passenger cabin and cargo compartment are not explained in greater detail.

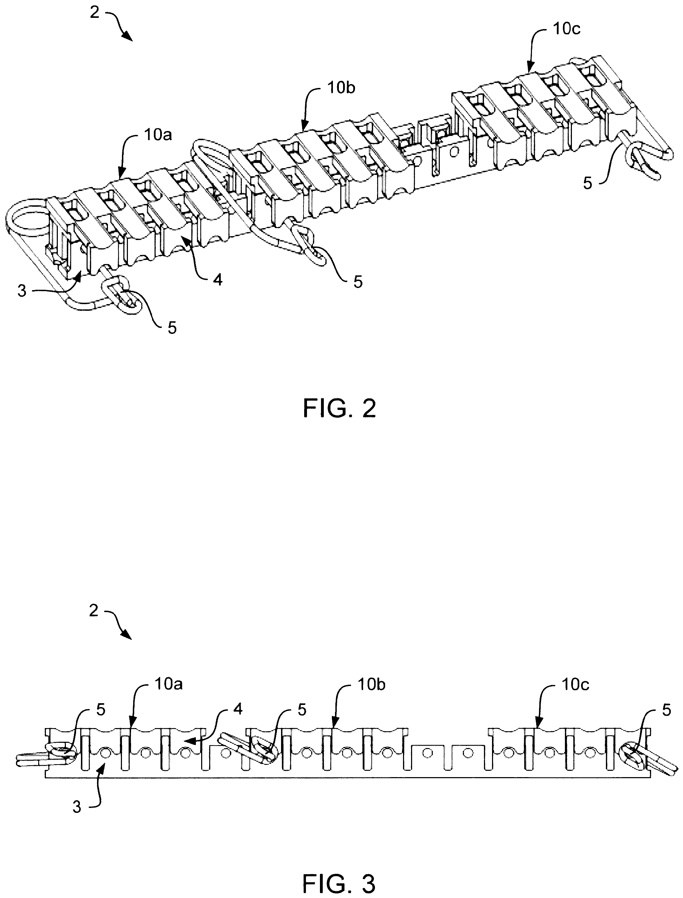

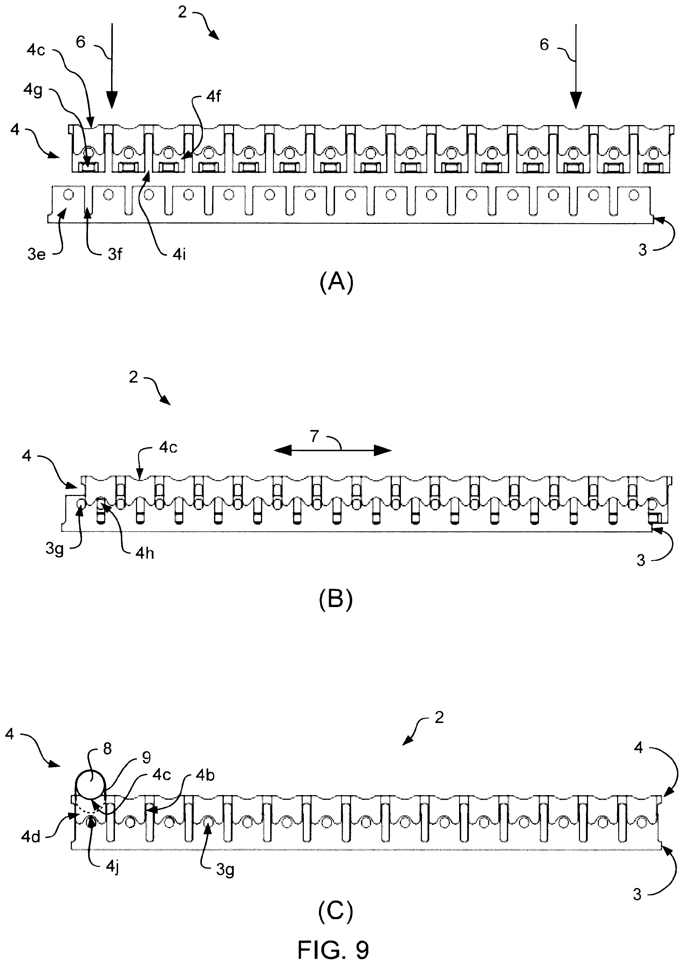

Figure 2 shows a quick-fastening support device 2 for supporting elements (8 in Figure 9(C)) that are to be routed on an associated structure, e. g. the fuselage 1a of the rotary wing aircraft 1 of Figure 1. However, it should be noted that the quick-fastening support device 2 is not limited to supporting elements that are to be routed in or on a fuselage of a rotary wing aircraft, but may likewise be used for supporting any elements that are to be routed on any associated structure.

According to one aspect, the quick-fastening support device comprises a mounting interface 3 and a support rail 4. The mounting interface 3 is preferably fixedly mountable to a given associated structure, such as e. g. the fuselage 1a of the rotary wing aircraft 1 of Figure 1. The support rail 4, in turn, is preferably removably mountable to the mounting interface 3. According to one aspect, the support rail 4 is attachable to at least one and, preferably, to a multiplicity of elements that are to be routed on the associated structure, wherein attaching of the support rail 4 to a multiplicity of elements is preferably performed prior to removably mounting the support rail 4 to the mounting interface 3.

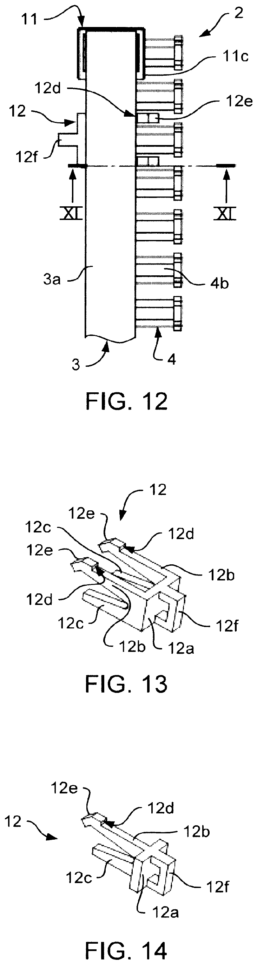

Preferably, the support rail 4 is locked at the mounting interface 3 by means of suitable locking means 5. By way of example, the locking means 5 are implemented by Fokker needles. However, other suitable locking means such as split pins, safety clips (e. g. safety clips 12 of Figure 13 and Figure 14), and so on, are likewise contemplated. Furthermore, a set of different locking means may also be used in arbitrary combinations thereof. In other words, Fokker needles, split pins, safety pins and so on may all be used in various different combinations more or less at the same time.

According to one aspect, the mounting interface 3 and the support rail 4 are provided as virtually endless profiles, which may then be shortened on demand as required. Preferentially, the profiles comprise thermoplastic material.

However, provision of the mounting interface 3 and the support rail 4 with predetermined length profiles is likewise contemplated. Only by way of example, while the mounting interface 3 is provided with a first length, the support rail 4 is split into three separate components respectively support rail sections 10a, 10b, 10c, which are separately mounted and locked to the mounting interface 3 by associated locking means 5. However, these three separate support rail sections 10a, 10b, 10c do even not cover the whole length of the mounting interface 3, but only portions where respective elements are to be routed by means of the quick-fastening support device 2.

Figure 3 shows the quick-fastening support device 2 of Figure 2 with the mounting interface 3 and the support rail 4 that are interlocked by means of the locking means 5. Figure 3 further illustrates the separate fixation of each one of the support rail sections 10a, 10b, 10c to the mounting interface 3 by an associating one of the locking means 5, as well as respective spacings between the support rail sections 10a, 10b, 10c.

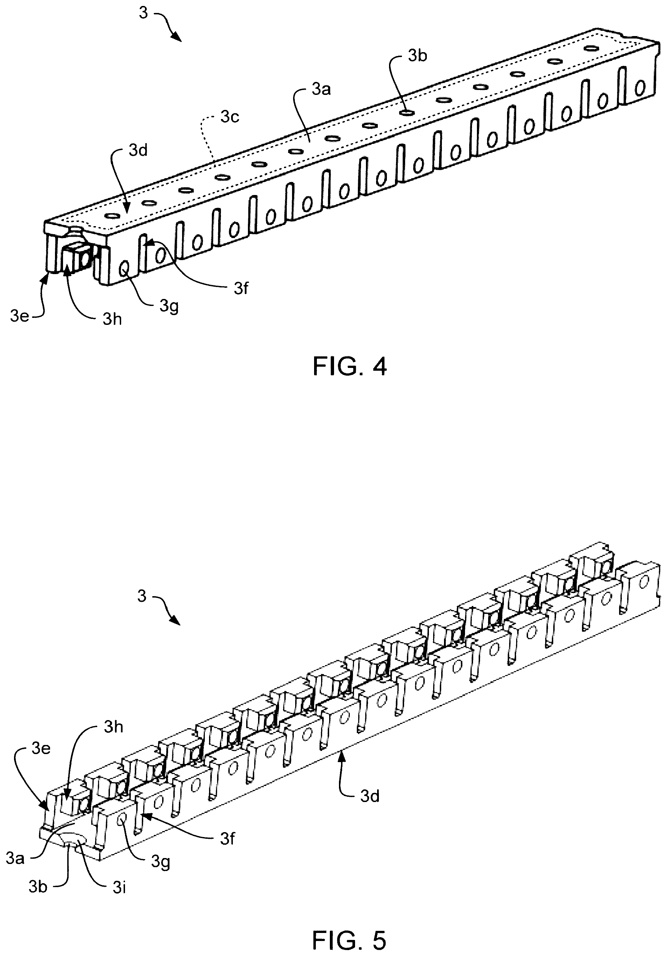

Figure 4 shows the mounting interface 3 of Figure 2 and Figure 3. According to one aspect, the mounting interface 3 comprises a base carrier 3a, which is in Figure 4 seen in direction of a mounting surface 3d, with which the mounting interface 3 is fixedly mounted to an associated structure, e. g. the fuselage 1a of the rotary wing aircraft 1 of Figure 1.

By way of example, the base carrier 3a comprises a plurality of mounting holes 3b that are suitable to allow mounting of the mounting interface 3 to the associated structure by means of e. g. screws and/or rivets. However, alternative and/or supplementary mounting means are likewise contemplated. For instance, a glued or bonded connection of the base carrier 3a to the associated structure is likewise contemplated. Therefore, according to one aspect, one or more adhesive stripes 3c may be provided on the mounting surface 3d of the base carrier 3a.

According to one aspect, the base carrier 3a is provided with at least one and, preferably, with a multiplicity of aligned support rail retainers 3e that are respectively spaced apart from each other by an associated separating gap 3f. It should be noted that for purposes of simplicity and clarity of the drawings, however, only a single support rail retainer 3a and a single separating gap 3f are labelled.

Preferably, one mounting hole 3b is provided for each one of the separating gaps 3f. However, alternatively one mounting hole 3b is provided in the base carrier 3a for each one of a multiplicity of aligned support rail retainers 3e.

According to one aspect, at least one and, preferably, each one of a multiplicity of aligned support rail retainers 3e is at least approximately U-shaped and comprises at least one blocking tooth 3h. Preferentially, at least one and, preferably, each one of a multiplicity of aligned support rail retainers 3e comprises two diametrically opposing blocking teeth 3h that face each other. However, again for purposes of simplicity and clarity of the drawings, only a single blocking tooth 3h is labelled.

Preferably, the at least one and, illustratively, the two blocking teeth 3h face each other and close an open end of the at least one approximately U-shaped support rail retainer 3e at least partly. Preferentially, the at least one and, illustratively, the two blocking teeth 3h are provided with at least approximately equal pitch and feature suitable slopes, chamfers, radii for enabling easy slide and self-guiding functionality.

According to one aspect, at least one and, preferably, each one of the multiplicity of aligned support rail retainers 3e is provided with a lock hole 3g. Preferably, the lock hole 3g traverses a respective one of the multiplicity of aligned support rail retainers 3e from one side of the mounting interface 3 to the other side of the mounting interface 3 completely in order to allow arrangement of the locking means 5 of Figure 2 and Figure 3, e. g. the Fokker needle of Figure 2 and Figure 3, in the lock hole 3g so that it traverses entirely the respective one of the multiplicity of aligned support rail retainers 3e.

Figure 5 shows the mounting interface 3 of Figure 4 for further illustrating the multiplicity of aligned support rail retainers 3e, which are preferably at least approximately U-shaped and provided with the blocking teeth 3h. Figure 5 further illustrates that the blocking teeth 3h preferably close the open end of the associated one of the multiplicity of aligned support rail retainers 3e and are together with the latter traversed by the lock hole 3g.

According to one aspect, the base carrier 3a of the mounting interface 3, which comprises the mounting holes 3b, further comprises suitable countersinks 3i. The latter are embodied at the mounting holes 3b, respectively.

Finally, Figure 5 also further illustrates the respective separating gaps 3f between adjacent support rail retainers 3e. These separating gaps 3f are advantageously provided such that the base carrier 3e may be folded resp. bended if required e. g. to a non-flat associated structure, to which the mounting interface 3 is fixedly mounted. Furthermore, at the location of each separating gap 3f, the mounting interface 3 may be shortened, i. e. cut, to adapt its length to required application-specific parameters.

According to one aspect, each one of the multiplicity of aligned support rail retainers 3e is formed by two laterally opposing L-shaped retainer walls that are mounted to the base carrier 3a. Preferably, the neck of the L-shaped elements is attached or integrally formed with the base carrier 3a, while the feet of the L-shaped wall members define the blocking teeth 3h that oppose each other.

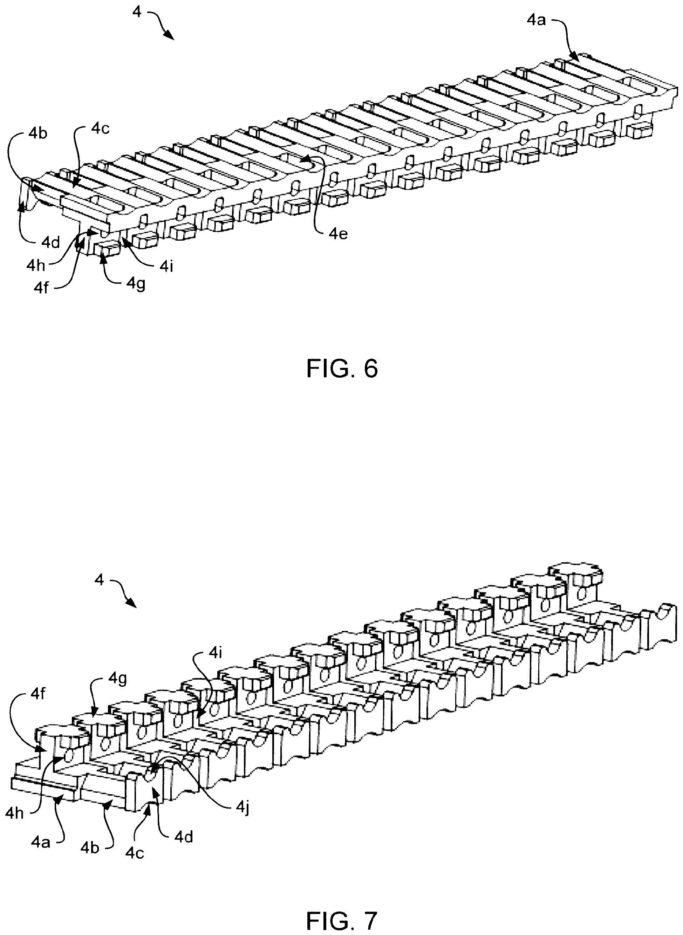

Figure 6 shows the support rail 4 of Figure 2 and Figure 3, which comprises a base carrier 4a. Preferably, the base carrier 4a is provided with at least one and, preferentially, a multiplicity of aligned blocking counter-tooth supports 4f that are respectively spaced apart from each other by an associated separating gap 4i. Optionally, the base carrier 4a comprises a plurality of weight reducing recesses 4e, which may either be provided as cavities, pockets or through-holes.

According to one aspect, at least one and, preferably, each one of the multiplicity of aligned blocking counter-tooth supports 4f is at least approximately T-shaped and comprises at least one and, preferentially, two blocking counter-teeth 4g. More specifically, a respective base of the T-shaped blocking counter-tooth 4f is preferably defined by a respective associated one of the aligned blocking counter-tooth supports 4f, while the leg of the T-shaped blocking counter-tooth support 4f preferentially extends perpendicular from the base carrier 4a and is provided with the two blocking counter-teeth 4g, which extend from the respective leg in opposed directions.

According to one aspect, at least one and, preferably, each one of the multiplicity of aligned blocking counter-tooth supports 4f comprises at least one associated routing guide 4b that is adapted for supporting an element (e. g. element 8 in Figure 9) that is to be routed). Preferably, at least one and, preferentially, each routing guide 4b comprises a guide cavity 4c for accommodating at least partly the element that is to be routed.

Preferably, at least one and, preferentially, each one of the blocking counter-tooth supports 4f comprises a lock hole 4h. The lock hole 4h is provided for being made concurrent with an associated one of the locking holes 3g of the mounting interface 3 of Figure 4 and Figure 5.

According to one aspect, at least one and, preferably, each one of the routing guides 4b is provided with an associated end plate 4d. Preferably, the end plate 4d has a size that is greater than the cross-section of the at least one associated routing guide 4b.

Figure 7 shows the support rail 4 of Figure 6 with the base carrier 4a, the routing guides 4b and the blocking counter-tooth supports 4f for further illustrating the separating gaps 4i between adjacent blocking counter-tooth supports 4f, the blocking counter-teeth 4g that are provided on each one of the blocking counter-tooth supports 4f, as well as the end plates 4d that are provided on the routing guides 4b.

More specifically, each one of the blocking counter-tooth supports 4f is preferably provided with two blocking counter-teeth 4g. The latter preferably extend as lateral protrusions from a respective leg of a given blocking counter-tooth support 4f, preferentially in opposed lateral directions. Preferentially, the two blocking counter-teeth 4g are provided with at least approximately equal pitch and feature suitable slopes, chamfers, radii for enabling easy slide and self-guiding functionality. Furthermore, the two blocking counter-teeth 4g may be provided with associated paint marks for visual verification purposes.

However, as described above, a single blocking counter-tooth 4g on each one of the blocking counter-tooth supports 4f or different blocking counter-teeth 4g having differing lengths and/or shapes are likewise contemplated. In fact, a respective dimensioning and shaping of the blocking counter-teeth 4g can be made in an application-specific manner dependent on a corresponding dimensioning and shaping of the blocking teeth 3h of the mounting interface 3 of Figure 4 and Figure 5.

Figure 7 also further illustrates a preferred shaping of the routing guides 4b. The latter are preferably adapted for attachment of an associated element fixation (9 in Figure 9), such as a cable tie or a clamp, for fixation of an element (8 in Figure 9) that is to be routed by means of the support rail 4, and a given routing guide 4b thereof. Illustratively, an underside of the routing guide 4b that is opposed to the guide cavity 4c of the routing guide 4b is at least approximately arc- or semi-circular shaped. Thus, a respective element fixation (9 in Figure 9) can easily and tightly be attached on the routing guide 4b.

Furthermore, the end plate 4d is provided such that gliding off of an attached element fixation (9 in Figure 9) from the at least one associated routing guide 4b is prevented. Furthermore, the end plate 4d is preferably provided with a recess 4j. The latter is provided to enable access for a suitable locking means (5 in Figure 2 and Figure 3), such as a Fokker needle, to the lock hole 4h that is provided in the blocking counter-tooth support 4f.

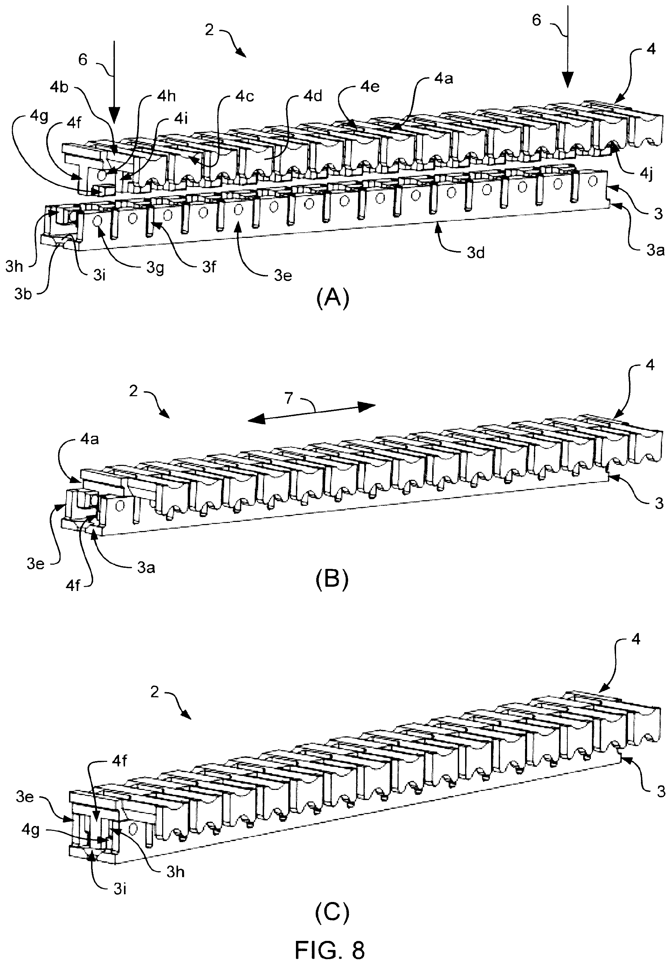

Figure 8 shows an exemplary assembling method for mounting the support rail 4 of Figure 6 and Figure 7 to the mounting interface 3 of Figure 4 and Figure 5 in order to form the quick-fastening support device 2 of Figure 2 and Figure 3. The assembly method is illustratively exemplified in three parts of Figure 9, i. e. parts (A) to (C).

Part (A) shows positioning of the support rail 4 such that the blocking counter-tooth supports 4f are facing the rail retainers 3e of the mounting interface 3. The mounting interface 3 is exemplarily supposed to be fixedly mounted to an associated structure, such as e. g. the fuselage 1a of the rotary wing aircraft 1 of Figure 1.

More specifically, the blocking counter-tooth supports 4f are positioned such that they are respectively arranged in the region of the separating gaps 3f of the mounting interface 3 and, more particularly, in positions between respective blocking teeth 3h of the mounting interface 3. The support rail 4 is then pushed into an insertion direction 6 towards the mounting interface 3 to perform an initial insertion movement of the support rail 4 into the mounting interface 3 in the insertion direction 6 for inserting the support rail 4 into the mounting interface 3. The initial insertion movement in the insertion direction 6 is performed until any further movement of the support rail 4 in the insertion direction 6 is blocked by the base carrier 4a of the support rail 4 or by the mounting interface 3.

Part (B) shows a subsequent locking movement of the support rail 4 in the mounting interface 3, i. e. relative to the mounting interface 3. More specifically, after having finalized the initial insertion movement according to part (A), the support rail 4 is moved into a locking direction 7 in the mounting interface 3, such that the support rail 4 is locked in the mounting interface 3. The locking movement is preferably performed until the blocking counter-teeth 4g of the support rail 4 are arranged below resp. interlocked with the blocking teeth 3h of the mounting interface 3.

Part (C) shows the quick-fastening support device 2 after mounting of the support rail 4 to the mounting interface 3. As can be seen from part (C), the blocking counter-teeth 4g of the support rail 4 are arranged below resp. interlocked with the blocking teeth 3h of the mounting interface 3 such that removal of the support rail 4 from the mounting interface 3 in a direction that is opposed to the insertion direction 6 according to part (A) is not possible. Accordingly, the support rail 4 is securely locked in the mounting interface 3.

It should be noted that, however, an unintentional unlocking would still be possible by moving the support rail 4 into a direction that is opposed to the locking direction 7 according to part (B). Therefore, the locking means 5 of Figure 2 and Figure 3 must be mounted to the quick-fastening support device 2 as illustrated in Figure 2 and Figure 3 to prevent such unintentional unlocking of the quick-fastening support device 2.

It should be noted that in the illustrated example the insertion direction 6 and the locking direction 7 are preferably at least approximately perpendicular. However, a perpendicular arrangement of the insertion direction and the locking direction is not mandatory and other movement directions are likewise contemplated. However, in any case a two-step movement for removably mounting the support rail 4 to the mounting interface 3 is preferred, independent on particular inserting and locking movement directions.

Figure 9 shows the assembly method according to Figure 8 again in part (A) to part (C) for further illustrating the preferred two-step movement for removably mounting the support rail 4 of Figure 6 and Figure 7 of the mounting interface 3 of Figure 4 and Figure 5 in order to assembly the quick-fastening support device 2 of Figure 2 and Figure 3. More specifically, part (A) further illustrates arrangement of the blocking counter-teeth 4g of the support rail 4 in the region of the separating gaps 3f of the mounting interface 3 prior to performing the initial insertion movement of the support rail 4 in the insertion direction 6 according to Figure 8, part (A), towards the mounting interface 3. Part (B) further illustrates the support rail 4 that is initially inserted into the mounting interface 3 such that the subsequent locking movement of the support rail 4 into the locking direction 7 of Figure 8, part (B) in the mounting interface 3 - in Figure 9, part (B) illustratively to the left side - can be performed.

According to one aspect, as already described above, the support rail 4 and, more specifically, each routing guide 4b of the support rail 4 that is provided with a respective guide cavity 4e, is provided for routing an associated element 8 that is to be routed on an associated structure, such as the fuselage 1a of the rotary wing aircraft 1 of Figure 1. Preferably, the guide cavity 4c is shaped such that the element 8, which is illustratively a cable with a round cross-section, fits thereinto. Accordingly, the guide cavity 4c is preferably at least approximately arc-shaped, i. e. defined as a section of a circle.

According to one aspect, the cable 8 is positioned in the guide cavity 4c and attached to the routing guide 4b by means of an element fixation 9, which is preferably a cable tie or a clamp, prior to mounting the support rail 4 to the mounting interface 3, i. e. prior to performing the two-step movement as described with respect to part (A) and part (B) of Figure 9. Furthermore, according to one aspect a plurality of elements respectively cables 8 is mounted to the support rail 4, i. e. to associated guide cavities 4c of the routing guides 4b, prior to removably mounting the support rail 4 to the mounting interface 3. However, for clarity and simplicity of the drawings, only a single cable 8 that is fixed by means of an element fixation 9, such as a cable tie or a clamp, to one of the routing guides 4b is shown in part (C) of Figure 9.

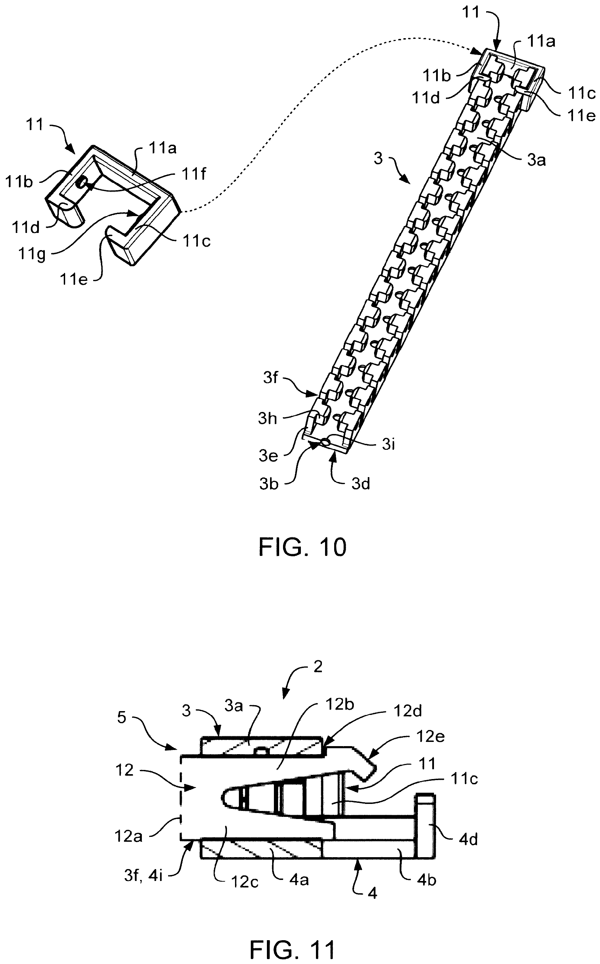

Figure 10 shows the mounting interface 3 of Figure 4 and Figure 5 with the base carrier 3a and the support rail retainers 3e which are provided with associated blocking teeth 3h, and wherein adjacent support rail retainers 3e are spaced apart in longitudinal direction of the base carrier 3a by associated separating gaps 3f. Furthermore, the base carrier 3a is provided with the mounting holes 3b.

According to one aspect, the mounting holes 3b are now embodied as blind holes in contrast to Figure 4 and Figure 5, where the mounting holes 3b are formed as through holes in the base carrier 3a. The blind holes are preferably machined into a surface of the base carrier 3a that is opposed to the mounting surface 3d of the base carrier 3a. Provision of the blind holes enable use of an adhesive, such as e. g. the adhesive stripe 3c of Figure 4 and Figure 5, on the mounting surface 3d, or of any suitable glue, such as a fluid glue, on the mounting surface 3d while avoiding that part of the adhesive resp. glue traverses the base carrier 3a during mounting of the mounting interface 3, which might happen when the mounting holes 3b are embodied according to Figure 4 and Figure 5 as through holes.

Furthermore, according to one aspect now an end stopper 11 is provided. More specifically, the end stopper 11 is preferably mountable to the mounting interface 3 for determining a mounting end position of the support rail 4 of Figure 6 and Figure 7 on the mounting interface 3 during assembling of the quick-fastening support device 2 of Figure 2 and Figure 3.

According to one aspect, the end stopper 11 is at least essentially C-shaped respectively implemented in the form of a C-clip. More specifically, the end stopper 11 preferably comprises a base 11a and two L-shaped end stopper arms 11b, 11c. Preferably, the L-shaped end stopper arms 11b, 11c are integrally formed on opposed axial ends of the end stopper base 11a such that respective foot portions of the L-shaped end stopper arms 11b, 11c form retaining hooks 11d, 11e that are formed so as to be arranged in associated separating gaps 3f of the mounting interface 3. Furthermore, the L-shaped end stopper arms 11b, 11c are preferably provided with inwardly directed protrusions 11g, 11f that are formed for engaging associated lock holes 3g of Figure 4 and Figure 5 of the mounting interface 3, respectively a selected one of the support rail retainers 3e.

More particularly, the protrusions 11f, 11g preferably define retaining pins that are facing each other. This applies similarly to the retaining hooks 11d, 11e, which are also facing each other.

The end stopper 11 is shown in an enlarged detail view for illustrating a preferred implementation thereof. Furthermore, the end stopper 11 is shown mounted on the mounting interface 3 on a selected one of the support rail retainers 3e, which is arranged on one axial end of the mounting interface 3, by way of example.

Figure 11 shows the quick-fastening support device 2 with the mounting interface 3 of Figure 4 and Figure 5, the support rail 4 of Figure 6 and Figure 7, the locking means 5 of Figure 2 and Figure 3 and the end stopper 11 of Figure 10. However, according to one aspect, the locking means 5 is in contrast to Figure 2 and Figure 3 now embodied as a safety clip 12.

More specifically, the safety clip 12 preferably comprises a clip base 12a from which at least a first flexible arm 12b and a second flexible arm 12c extend. The flexible arms 12b and 12c are preferably provided for passing through the separating gaps 3f of the mounting interface 3 and an associated separating gap 4i of the support rail 4.

Preferably, the first flexible arm 12b is provided with a retaining edge 12d and a slope 12e. The slope 12e is preferably provided for simplifying mounting of the safety clip 12 to the mounting interface 3 and the support rail 4 by supporting a flexible deformation, i. e. bending of the flexible arm 12b upon gliding along the base carrier 3a of the mounting interface 3. The retaining edge 12d in turn is provided for being retained in a form-fit connection at the base carrier 3a of the mounting interface 3 once the flexible clip arm 12b has returned, i. e. spring back into its un-deformed, or at least essentially un-deformed, position, as illustrated in Figure 11.

Figure 12 shows the quick-fastening support device 2 of Figure 11, with the mounting interface 3 that is provided with the end stopper 11, as well as with the support rail 4 that is removably mounted to the mounting interface 3 by means of the safety clip 12 of Figure 11. Preferably, the safety clip is provided with a grip or handle 12f.

Figure 13 shows the safety clip 12 of Figure 11 and Figure 12 with the clip base 12a, to which the grip or handle 12f is preferably integrally formed. According to one aspect, the safety clip 12 comprises two pairs of flexible arms 12b, 12c. Each pair of flexible arms 12b, 12c is preferably integrally formed on one axial end of the clip base 12a. Accordingly, a virtual prolongation of the grip 12f illustratively defines a symmetry axis of the safety clip 12 along which the pairs of flexible arms 12b, 12c are mirrored.

Figure 14 shows the safety clip 12 of Figure 11 and Figure 12 with the base carrier 12a, to which the grip or handle 12f is preferably integrally formed. However, in contrast to Figure 13 the safety clip 12 now only comprises a single pair of flexible arms 12b, 12c. These flexible arms 12b, 12c are preferably formed along a virtual prolongation of the grip or handle 12f, which defines the axis of symmetry in the safety clip 12 according to Figure 13.

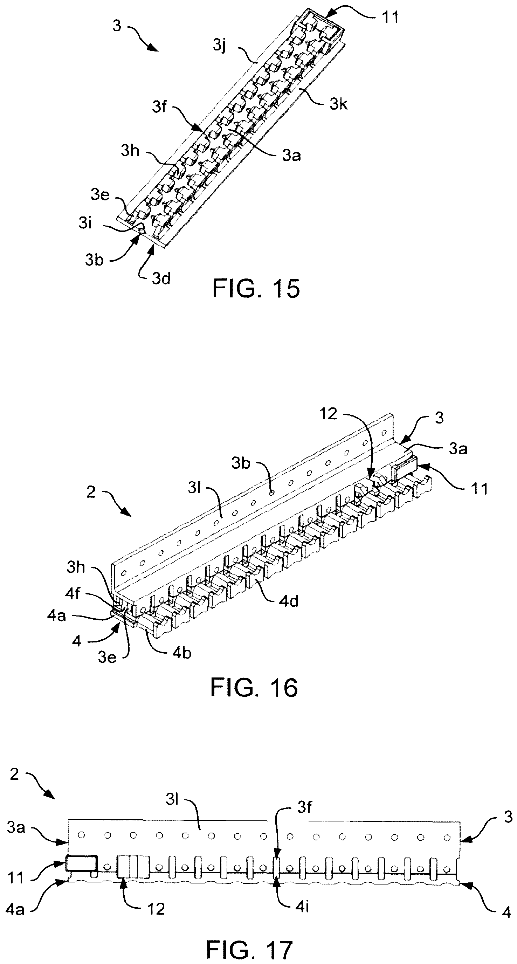

Figure 15 shows the mounting interface 3 of Figure 4 and Figure 5 with the end stopper 11 of Figure 10. However, in contrast to Figure 4 and Figure 5, the base carrier 3a of the mounting interface 3 is now provided with lateral extensions 3j, 3k. In other words, compared to the base carrier 3a of the mounting interface 3 according to Figure 4 and Figure 5, the base carrier 3a is now enlarged on both lateral sides of the mounting interface 3.

Figure 16 shows the quick-fastening support device 2 with the mounting interface 3 and the support rail 4 of Figure 2 and Figure 3. The mounting interface 3 is again provided with the end stopper 11 of Figure 10. Furthermore, the support rail 4 is locked to the mounting interface 3 by means of the safety clip 12 of Figure 13, instead of the Fokker needle that defines the locking means 5 in Figure 2 and Figure 3.

However, in contrast to Figure 2 and Figure 3, the base carrier 3a of the mounting interface 3 is now provided with an additional mounting flange 3l that comprises the mounting holes 3b. The mounting flange 3l is preferably arranged at a predetermined angle with respect to the base carrier 3a. By way of example, the mounting flange 3l is perpendicular to the base carrier 3a. However, it should be noted that an angle of 90° is merely shown by way of example and not for limiting the invention accordingly. Instead, any other angle may likewise be implemented.

Figure 17 shows the quick-fastening support device 2 of Figure 16 with the mounting interface 3 and the support rail 4. The mounting interface 3 is again provided with the perpendicular mounting flange 3l.

Figure 17 further illustrates arrangement of the end stopper 11 of Figure 10 and the safety clip 12 of Figure 13 on the quick-fastening support device 2. Figure 17 further illustrates also the congruently arranged separating gaps 3f, 4i of the mounting interface 3 and the support rail 4.

Finally, it should be noted that modifications of the above-described aspects of the present invention are also within the common knowledge of the person skilled in the art and, thus, also considered as being part of the present invention. For instance, according to one aspect, the mounting interface 3 and the support rail 4 described above comprise thermoplastic material, such as polyamide PA and/or polytetrafluorethylene, and they are manufactured by means of a suitable injection molding process. However, a suitable 3D printing process is likewise contemplated. This applied mutatis mutandis to the above-described end stopper and/or safety clips.

### Reference List

- 1: rotary wing aircraft
- 1a: fuselage
- 1b: tail boom
- 1c: horizontal stabilizer
- 1d: fin
- 1e: tail rotor shroud
- 1f: board side wall
- 1g: starboard side wall
- 2: quick-fastening support device
- 3: mounting interface
- 3a: base carrier
- 3b: mounting hole
- 3c: adhesive stripe
- 3d: mounting surface
- 3e: support rail retainer
- 3f: separating gap
- 3g: lock hole
- 3h: blocking tooth
- 3i: countersink
- 3j, 3k: lateral extensions
- 3l: perpendicular mounting flange
- 4: removable support rail
- 4a: base carrier
- 4b: routing guide
- 4c: guide cavity
- 4d: guide end plate
- 4e: weight reducing recess
- 4f: blocking counter-tooth support
- 4g: blocking counter-tooth
- 4h: lock hole
- 4i: separating gap
- 4j: plate recess
- 5: locking means
- 6: support rail insertion direction
- 7: support rail locking direction
- 8: routed element
- 9: routed element fixation
- 10a, 10b, 10c: removable support rail sections
- 11: end stopper
- 11a: end stopper base
- 11b, 11c: L-shaped end stopper arms
- 11d, 11e: retaining hooks
- 11f, 11g: retaining pins
- 12: safety clip
- 12a: clip base
- 12b, 12c: flexible clip arms
- 12d: retaining edge
- 12e: slope
- 12f: grip

## Claims

1. A quick-fastening support device (2) for supporting elements (8) that are to be routed on an associated structure (1a), **characterized by** a mounting interface (3) that is fixedly mountable to an associated structure (1a), and a support rail (4) that is removably mountable to the mounting interface (3), the support rail (4) being attachable to a multiplicity of elements (8) that are to be routed prior to being removably mounted to the mounting interface (3).

2. The quick-fastening support device (2) of claim 1,
**characterized in that** the support rail (4) is removably mountable to the mounting interface (3) by means of a two-step movement that comprises an initial insertion movement of the support rail (4) in an insertion direction (6) into the mounting interface (3) for inserting the support rail (4) into the mounting interface (3), and a subsequent locking movement of the support rail (4) into a locking direction (7) in the mounting interface (3) for locking the support rail (4) in the mounting interface (3), wherein the insertion direction (6) and the locking direction (7) are preferably at least approximately perpendicular.

3. The quick-fastening support device (2) of claim 1,
**characterized in that** an end stopper (11) is provided, the end stopper (11) being mountable to the mounting interface (3) for determining a mounting end position of the support rail (4) on the mounting interface (3).

4. The quick-fastening support device (2) of claim 1, **characterized in that** the mounting interface (3) is at least approximately U-shaped and the support rail (4) is at least approximately T-shaped.

5. The quick-fastening support device (2) of claim 1,
**characterized in that** the mounting interface (3) comprises a base carrier (3a), the base carrier (3a) being provided with a multiplicity of aligned support rail retainers (3e) that are respectively spaced apart from each other by an associated separating gap (3f).

6. The quick-fastening support device (2) of claim 5,
**characterized in that** each one of the multiplicity of aligned support rail retainers (3e) is at least approximately U-shaped and comprises at least one blocking tooth (3h).

7. The quick-fastening support device (2) of claim 6,
**characterized in that** the at least one blocking tooth (3h) closes an open end of the at least approximately U-shaped support rail retainer (3e) at least partly.

8. The quick-fastening support device (2) of claim 6,
**characterized in that** the support rail (4) comprises a base carrier (4a), the base carrier (4a) being provided with a multiplicity of aligned blocking counter-tooth supports (4f) that are respectively spaced apart from each other by an associated separating gap (4i), wherein the base carrier (4a) preferably comprises a plurality of weight reducing recesses (4e).

9. The quick-fastening support device (2) of claim 8,
**characterized in that** each one of the multiplicity of aligned blocking counter-tooth supports (4f) is at least approximately T-shaped and comprises at least one blocking counter-tooth (4g).

10. The quick-fastening support device (2) of claim 8,
**characterized in that** each one of the multiplicity of aligned blocking counter-tooth supports (4f) comprises at least one associated routing guide (4b) that is adapted for supporting an element (8) that is to be routed.

11. The quick-fastening support device (2) of claim 10,
**characterized in that** the at least one associated routing guide (4b) comprises a guide cavity (4c) for accommodating at least partly an element (8) that is to be routed.

12. The quick-fastening support device (2) of claim 11,
**characterized in that** the at least one associated routing guide (4b) is provided with an end plate (4d), the end plate (4d) having a size that is greater than a cross-section of the at least one associated routing guide (4b).

13. The quick-fastening support device (2) of claim 12,
**characterized in that** the at least one associated routing guide (4b) is adapted for attachment of an element fixation (9), in particular a cable tie or a clamp, for fixation of an element (8) that is to be routed, wherein the end plate (4d) is provided for preventing gliding off of the element fixation (9) from the at least one associated routing guide (4b).

14. The quick-fastening support device (2) of claim 1,
**characterized in that** locking means (5) are provided for locking the support rail (4) at the mounting interface (3), wherein the locking means (5) preferably comprise at least one safety clip (12).

15. A rotary wing aircraft (1) with a fuselage (1a) and at least one quick-fastening support device (2) that is mounted to the fuselage (1a), the at least one quick-fastening support device (2) being embodied according to any one of the preceding claims.
